# EUROPEAN PATENT APPLICATION

(11) **EP 2 508 421 A2**
(43) Date of publication of application: **10.10.2012**
(21) Application number: 12162307.8
(22) Date of filing: 29.03.2012
(51) Int. Cl.: B64C 25/36

(54) **Anti-rotation interlocking inboard and outboard wheel components**

(30) Priority: 04.04.2011 US 201113079144
(71) Applicant: Honeywell International Inc., Morristown, NJ 07962-2245 (US)
(72) Inventor: Shamo, James M., Morristown, NJ New Jersey 07962-2245 (US)
(74) Representative: Houghton, Mark Phillip

(57) **Abstract**

Relative rotation between an inboard and an outboard wheel component (12,14) of an aircraft wheel assembly is inhibited by an interlocking tongue and groove interface (50). In one example, an aircraft wheel includes a first annular component, a second annular component separable from the first annular component, and at least one tongue and groove interface between the first component and the second component. The second annular component is connected to and aligned with the first component about an axis of rotation of the wheel. The at least one tongue and groove interface is configured to inhibit relative rotation between the first component and the second component about the axis of rotation of the wheel.

## Description

### TECHNICAL FIELD

In general, the disclosure relates to an aircraft wheel assembly.

### BACKGROUND

In one form, an aircraft wheel assembly includes an inboard annular wheel component with an integral inboard tire rim, a demountable separable outboard annular wheel component with an integral outboard tire rim, a split lock ring seated within an annular groove in the inboard wheel component and, in some cases, an arrangement associated with the lock ring to maintain it within the groove independent of tire inflation. Aircraft wheels are subject to a variety of forces during aircraft operation, including, e.g., during takeoff, landing and braking operations. Various mechanisms have been employed to counteract such forces on the wheel assembly and to maintain the integrity and operational characteristics of the assembly under the influence of such forces.

### SUMMARY

In general, this disclosure is directed to inhibiting relative rotation between inboard and outboard aircraft wheel components. In one example, an aircraft wheel includes a first annular rim, a separable second annular rim, and at least one tongue and groove interface between the first rim and the second rim. The separable second annular rim is connected to and aligned with the first rim about an axis of rotation of the wheel. The at least one tongue and groove interface between the first rim and the second rim is configured to inhibit relative rotation between the first rim and the second rim about the axis of rotation of the wheel.

In another example, a method assembling an aircraft wheel includes sliding an annular portion of a first wheel rim over an annular portion of a second wheel rim and interlocking the first wheel rim to the second wheel rim with at least one tongue and groove interface configured to inhibit relative rotation between the first rim and the second rim about an axis of rotation of the wheel assembly.

The details of one or more examples are set forth in the accompanying drawings and the description below. Other features, objects, and advantages of the disclosed examples will be apparent from the description and drawings, and from the claims.

### BRIEF DESCRIPTION OF DRAWINGS

FIG. 1 is a section view of an example wheel assembly according to this disclosure including interlocking inboard and outboard annular wheel components.

FIG. 2A is a broken perspective view of an example wheel assembly including a tongue and groove interface between an inboard annular wheel component and a outboard annular wheel component.

FIG. 2B is a broken plan view of the tongue and groove interface between the inboard annular wheel component and outboard annular wheel component of FIG. 2A.

FIGS. 3A-3F illustrate a number of example profile shapes for a tongue of a tongue and groove interface between an inboard annular wheel component and a outboard annular wheel component of a wheel assembly according to this disclosure.

FIG. 4A is a broken perspective view of another example wheel assembly including a tongue and groove interface between an inboard annular wheel component and a outboard annular wheel component.

FIG. 4B is a broken partial section view of the tongue and groove interface between the inboard annular wheel component and outboard annular wheel component of FIG. 4A.

FIG. 5 is a flow chart illustrating an example method of assembling a wheel assembly.

### DETAILED DESCRIPTION

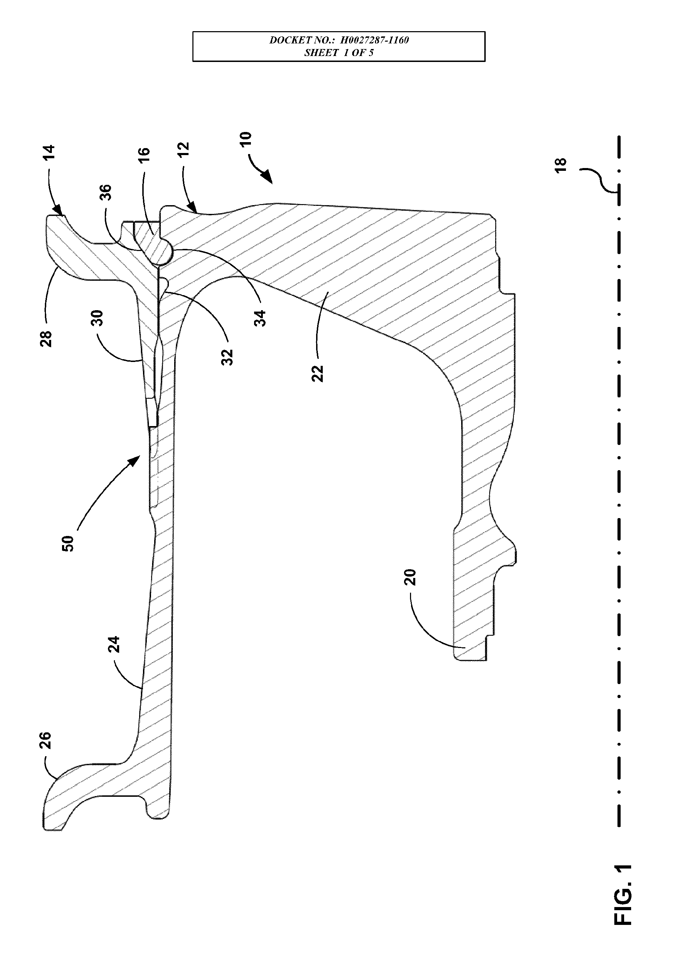

FIG. 1 is a section view of example wheel assembly 10 including inboard annular wheel component 12, outboard annular wheel component 14, and split lock ring 16. In FIG. 1, wheel assembly 10 has a longitudinal axis 18 about which the assembly rotates during operation of the vehicle to which the wheel is attached. Wheel assembly 10 may be employed in a number of different types of vehicles, including, e.g., a number of different types of aircraft and automotive vehicles. Wheel assembly includes inboard annular wheel component 12 and outboard annular wheel component 14 which together support a tire (not shown) thereon. Outboard wheel component 14 is axially secured to wheel component 12 with lock ring 16. In accordance with examples according to this disclosure, wheel assembly 10 of FIG. 1 includes interlocking inboard wheel component 12 and outboard wheel component 14 that, when assembled, engage one another to inhibit relative rotation between the inboard wheel component and outboard wheel component about axis of rotation 18 of the wheel assembly. Relative rotation between inboard wheel component 12 and outboard wheel component 14 about axis of rotation 18 may be undesirable in some cases because, for example, the rotation may affect the integrity of the lock ring 16 and/or a tire mounted on the inboard and outboard components 12 and 14, respectively.

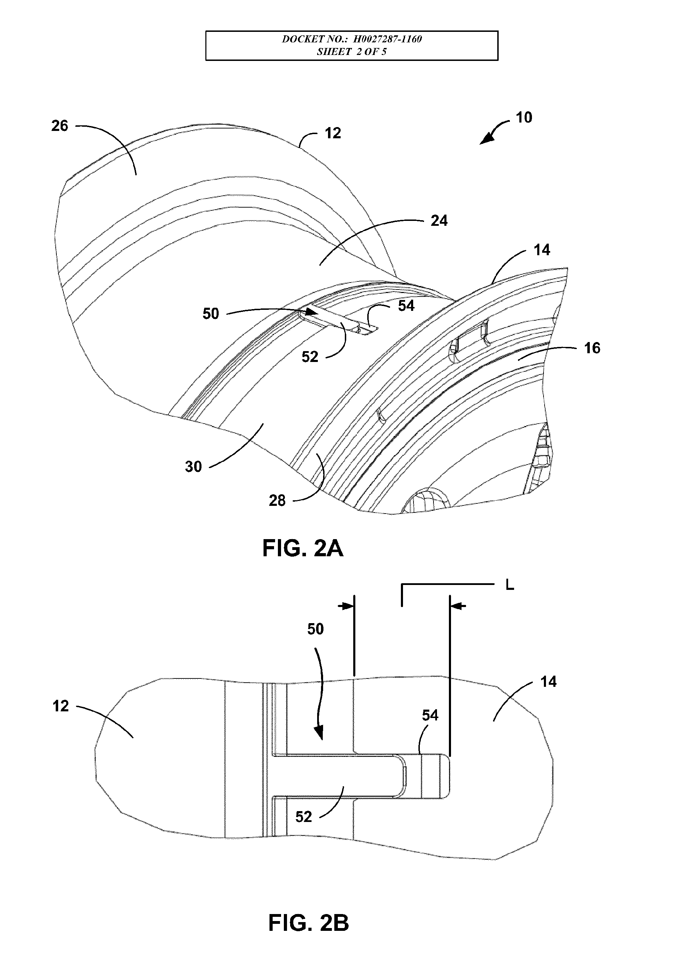

Inboard annular wheel component 12 includes hub 20, web 22, and inboard annular rim 24. In the example of FIG. 1, hub 20 is generally cylindrical. However, in other examples, hub 20 may assume a variety of shapes. Hub 20 may include a number of axially spaced annular recesses configured to receive suitable bearings for supporting inboard wheel component 12, and thereby wheel assembly 10, for rotation on an axle (not shown) having axis of rotation 18 as its center. Web 22 extends radially outwardly from one side of hub 20 and terminates into inboard annular rim 24. As is partially visible in FIG. 2A, web 22 may include a number of orifices distributed circumferentially about axis of rotation 18 in order to, e.g., reduce the weight of wheel assembly 10 and increase heat dissipation during braking.

Inboard annular rim 24 of inboard annular wheel component 12 includes inboard tire bead flange 26 protruding radially outward from rim 24. Outboard annular wheel component 14 likewise includes outboard tire bead flange 28 protruding radially outward from outboard annular rim 30 and disposed generally opposite that of flange 26. In the example of FIG. 1, inboard tire bead flange 26 extending radially outward from inboard annular rim 24 of inboard wheel component 12 is arranged at the inboard side (left side in the view of FIG. 1) of wheel assembly 10, while outboard tire bead flange 28 protruding radially outward from outboard rim 30 is arranged at the outboard side (right side in the view of FIG. 1) of the wheel assembly 10. Inboard and outboard tire bead flanges 26 and 28, respectively, support respective inboard and outboard beads of a tire (not shown) when the tire is assembled onto wheel assembly 10 and inflated, as described in greater detail below.

Aside from tire bead flange 26, inboard annular rim 24 of inboard wheel component 12 includes a generally annular section, part of which, in the example of FIG. 1 is tapered and another part of which is generally cylindrical. Similarly, outboard wheel component 14 includes outboard rim 30 extending axially inboard from tire bead flange 28 at the outboard edge of wheel assembly 10. The cylindrical portion of inboard annular rim 24 includes seal groove 32, which may be configured to receive a gasket or other suitable sealing member between inboard wheel component 12 and outboard wheel component 14. Outboard annular rim 30 of outboard wheel component 14 forms a generally cylindrical opening configured to receive inboard annular rim 24 of inboard wheel component 12. In one example, the cylindrical opening formed by outboard annular rim 30 of outboard wheel component 14 may be slightly larger than inboard annular rim 24 of inboard wheel component 12 to enable relative axial and rotatable sliding engagement between inboard wheel component 12 and outboard wheel component 14 during assembly of wheel assembly 10.

The axial dimension (e.g., a dimension measured in a direction substantially parallel to longitudinal axis 18) of outboard annular rim 30 may be of sufficient length to enable outboard annular wheel component 14 to be slid inboard (left in the view of FIG. 1) to provide adequate clearance to insert (or remove) split lock ring 16 into (or from) lock ring groove 34 in inboard annular rim 24 of inboard annular wheel component 12, and to be slid outboard (right in the view of FIG. 1) to cover seal groove 32 and its associated gasket or other sealing member. When outboard annular rim 30 of outboard annular wheel component 14 is in its installed position in wheel assembly 10, shown for example in FIG. 1, outboard annular rim 30 extends over seal groove 32 to sandwich the gasket or other suitable sealing member between inboard annular wheel component 12 and outboard annular wheel component 14 and create a seal there between.

Inboard annular rim 24 of inboard wheel component 12 and outboard annular rim 30 of outboard wheel component 14 each include lock ring grooves 34 and 36, as is shown in example wheel assembly 10 of FIG. 1. In one example, lock ring groove 36 in outboard annular wheel rim 30 may be curved to compliment the curvature of lock ring groove 34 in inboard annular wheel rim 24. Lock ring grooves 34 and 36 may generally be sized and dimensioned to conform to opposite sides of the lobe of split lock ring 16.

During assembly of wheel assembly 10, an uninflated pneumatic tire may be slid over inboard annular rim 24 of inboard annular wheel component 12 in an inboard direction (left in view of FIG. 1) from an outboard edge of inboard wheel component 12. A sealing gasket or other seal member may then be mounted within seal groove 32 in inboard annular rim 24 of inboard annular wheel component 12. Outboard annular wheel component 14 may be slid onto inboard wheel component 12 inboard (left in view of FIG. 1) from an outboard edge of inboard wheel component 12 such that the generally cylindrical opening formed by outboard annular rim 30 of outboard wheel component 14 receives inboard annular rim 24. Split lock ring 16 may be positioned into lock ring groove 34 of inboard annular rim 24 of inboard annular wheel component 12 after outboard annular wheel component 14 is assembled onto inboard wheel component 12. The tire is then inflated and the respective beads of the tire exert a separating force on respective inboard and outboard tire bead flanges 26 and 28 of inboard annular rim 24 and outboard annular rim 30, respectively. This force moves outboard annular wheel component 14 outboard (to the right in the view of FIG. 1) relative to inboard annular wheel component 12 until the wall of lock ring groove 36 of outboard annular wheel component 14 engages the lobe-shaped portion of split lock ring 16.

With the full pressurization of a tire on wheel assembly 10, split lock ring 16 may act to axially secure outboard annular wheel component 14 on inboard annular wheel component 12. While the relative rotational position between inboard and outboard wheel components 12, 14 may be substantially fixed in some states of the vehicle, in other states, forces exerted on wheel assembly 10 may urge the inboard and outboard wheel components 12, 14 to rotate relative to each other (about axis 18). For example, during relatively high load circumstances of the operation of wheel assembly 10, e.g., during touchdown or braking of an aircraft landing, torsion and other forces on various parts of wheel assembly 10 may act to cause undesirable relative rotation between inboard wheel component 12 and outboard wheel component 14. As such, in examples according to this disclosure, inboard annular wheel component 12 and outboard annular wheel component 14 of wheel assembly 10 interlock when assembled to engage and inhibit relative rotation between one another about axis of rotation 18 of the wheel assembly.

The components of wheel assembly 10 may be fabricated using a number of solid material manufacturing techniques, including, e.g., forging, casting, molding, or one or more material removal processes, including, e.g., milling, turning, grinding, electrical discharge machining (EDM), or laser or torch cutting. In one example, one or both of inboard and outboard wheel components 12 and 14, respectively, including the tongue and groove interface(s) described in detail below, may be forged to nominal dimensions and then finished by a combination of one or more of turning, milling, and grinding the respective components to final dimensional specifications.

FIGS. 2A and 2B illustrate one example of a wheel assembly including an interlocking inboard annular wheel component and outboard annular wheel component according to this disclosure. FIG. 2A is a broken perspective view of wheel assembly 10 including tongue and groove interface 50 between inboard annular rim 24 and outboard annular rim 30. FIG. 2B is a broken plan view of tongue and groove interface 50 between inboard rim 24 and outboard rim 30 of FIG. 2A. In FIG. 2A, wheel assembly 10 includes inboard annular wheel component 12, outboard annular wheel component 14, split lock ring 16, and tongue and groove interface 50. As explained above, outboard annular wheel component 14 is connected to inboard annular wheel component 12 and axially secured thereto by split lock ring 16. Additionally, inboard rim 24 is interlocked to outboard rim 30 by tongue and groove interface 50, which is configured to inhibit relative rotation between inboard wheel component 12 and outboard wheel component 14.

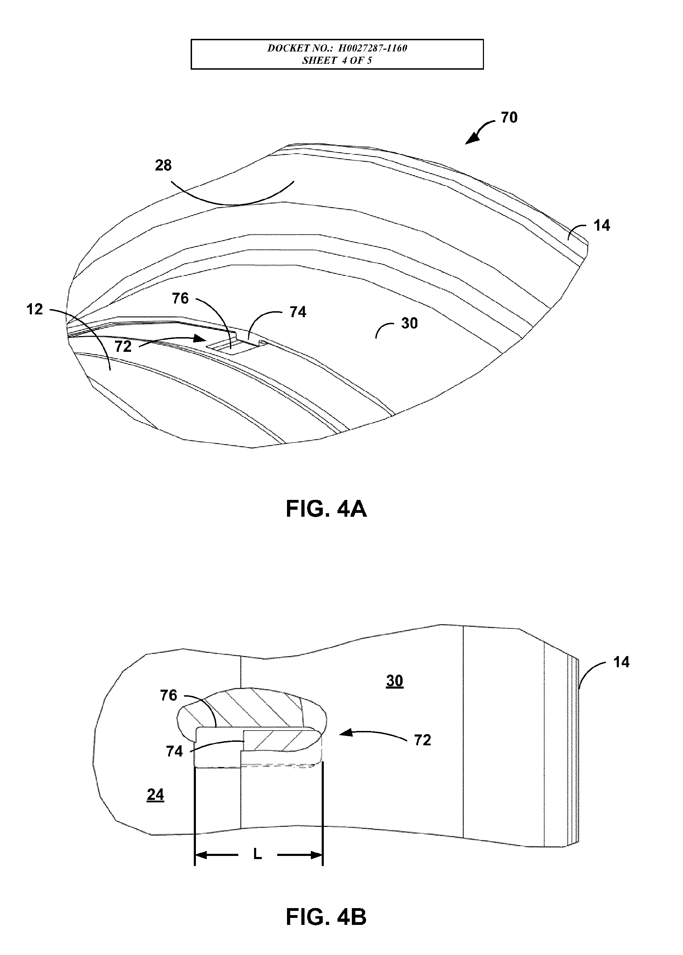

Tongue and groove interface 50 includes tongue 52 and groove 54. In the example of FIGS. 2A and 2B, tongue 52 of tongue and groove interface 50 is associated with (e.g., is defined by or mechanically coupled to) inboard annular rim 24 and groove 54 is associated with (e.g., is defined by) outboard annular rim 30. However, as explained with reference to the example of FIGS. 4A and 4B, a tongue and groove interface according to this disclosure may include a tongue extending from an outboard annular wheel component and a groove in an inboard annular wheel component of a wheel assembly. Referring again to FIGS. 2A and 2B, tongue 52 extends from inboard annular rim 24. In particular in the example of FIGS. 2A and 2B, tongue 52 includes an elongated protrusion extending radially outward from a radially outward surface of inboard annular rim 24. In another example, a tongue of a tongue and groove interface may include a protrusion extending axially from the outboard edge of inboard annular rim 24 of inboard annular wheel component 12. In some examples, tongue 52 is elongated on rim 24 of inboard annular wheel component 14 in a direction substantially parallel to longitudinal axis 18 (FIG. 1) of wheel assembly 10. In other examples, tongue 52 may be elongated in a different direction such that, e.g., tongue 52 ramps down in the axially outboard direction along rim 24 of inboard wheel component 14.

Groove 54 includes a slot extending axially from an inboard edge of outboard annular rim 30 of outboard annular wheel component 14 and extending radially all the way through the thickness of outboard annular rim 30. However, in another example, a groove of a tongue and groove interface may include a depression extending radially outward from a radially inner surface of outboard annular rim 30 of outboard annular wheel component 14. In contrast to a slot, a depression may refer to a material void in a wheel component that does not extend all the way through the thickness of the component. Tongue 52 is shaped and sized to engage groove 54 and groove 54 is sized and shaped to receive tongue 52 to interlock inboard annular rim 24 and outboard annular rim 30 such that tongue and groove interface 50 inhibits relative rotation between inboard wheel component 12 and outboard wheel component 14.

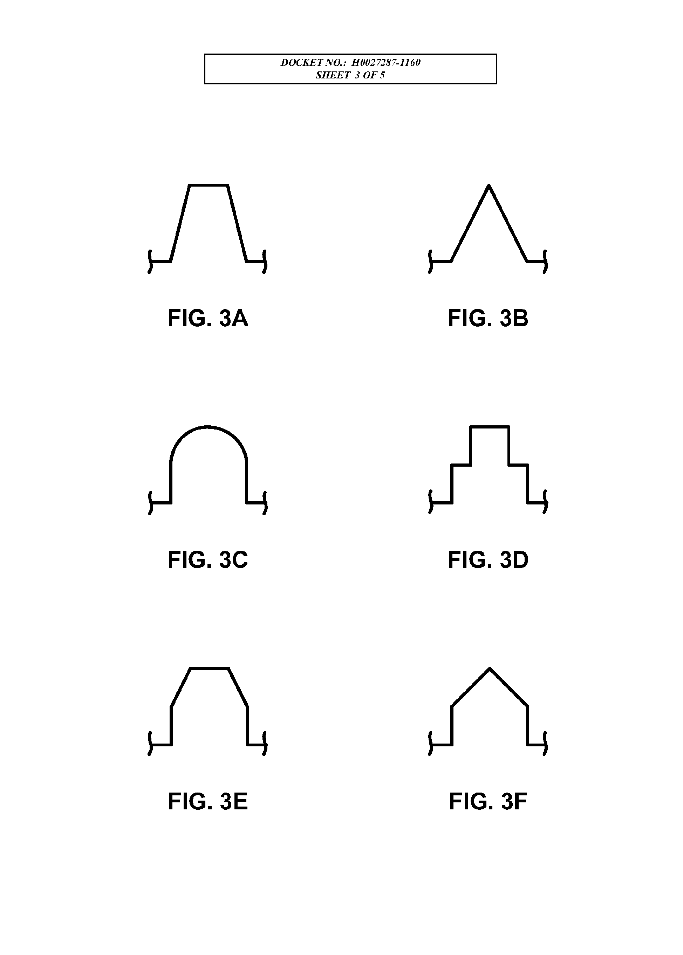

In one example, tongue 52 includes a generally rectilinear shape. For example in FIGS. 2A and 2B, tongue 52 includes a generally rectangular profile shape (e.g. the shape as viewed from the plan view of FIG. 2B). In other examples, a tongue of a tongue and groove interface between an inboard annular wheel component and outboard annular wheel component according to this disclosure may include different profile shapes, including, e.g. the tongue profile shapes illustrated in FIGS. 3A-3F. In the examples of FIGS. 3A-3D, for example, tongue 52 includes generally trapezoidal, triangular, arcuate, and stepped shapes respectively. More generally, in some examples, tongue 52 includes two ends connected to at least two side faces to define a protrusion on inboard annular rim 24, whereby the side faces engage corresponding surfaces of a groove to help inhibit relative rotation between inboard wheel component 12 and outboard wheel component 14. In some examples, the side faces are generally perpendicular to one or both of the ends, as illustrated in FIG. 3C. In other examples, the side faces may be at an obtuse angle to one of the ends of tongue 52, as illustrated in FIGS. 3A and 3B. Each of the side faces of tongue 52 may also include a first portion at an obtuse angle to one end of the tongue and a second portion generally perpendicular to the other end, as illustrated in FIG. 3E. In some examples, one end of tongue 52 includes a generally concave shape, as illustrated in FIGS. 3B, 3C, and 3F, which, in some cases, can be at least partially curvilinear. In some examples, the tongue and groove of a tongue and groove interface according to this disclosure may be sized and shaped to generally increase the contact surface area of the interface in an attempt to help distribute torsion and other forces on the wheel assembly by improving the distribution stresses induced from the forces on the tongue and groove interface.

In the example of FIGS. 2A and 2B, wheel assembly 10 includes one tongue and groove interface 50 interlocking inboard annular wheel component 12 and outboard annular wheel component 14 to inhibit relative rotation between the inboard and outboard components of the assembly. However, in other examples, wheel assemblies according to this disclosure may include a plurality of tongue and groove interfaces configured to inhibit relative rotation between an inboard wheel component and an outboard wheel component of the assembly. In some examples, wheel assembly 10 may experience loading during operation of a vehicle to which the wheel is attached that causes one or both of inboard wheel component 12 or outboard wheel component 14 to deform, e.g. to deform into an oval shape (in a cross-section taken perpendicular to axis 18). Deformation of one or both of inboard rim 24 or outboard rim 30 may compromise the extent to which the tongue engages with the groove of the tongue and groove interface 50 between inboard rim 24 and outboard rim 30. As such, in some examples, wheel assemblies according to this disclosure may include a plurality of tongue and groove interfaces to provide redundancy, such that when the inhibition of relative rotation provided by one of the interfaces is weakened or compromised by deformation of one or both of inboard rim 24 or outboard rim 30, another one of the tongue and groove interfaces may nevertheless be fully or sufficiently engaged to inhibit relative rotation between inboard wheel component 12 and outboard wheel component 14.

In one example, a wheel assembly according to this disclosure includes a range from 1 to 8 tongue and groove interfaces between inboard rim 24 and outboard rim 30 and configured to inhibit relative rotation between an inboard wheel component and an outboard wheel component of the assembly, such as 1 to 4 tongue and groove interfaces, 3 to 4 tongue and groove interfaces or 1 to 3 tongue and groove interfaces. The number and distribution of interlocking interfaces may be selected based on various factors, such as the shear force and compressive force expected to be exerted on the wheel assembly. In example wheel assemblies including a plurality of tongue and groove interfaces, the tongue and groove interfaces may be distributed at approximately equal distances or at unequal distances circumferentially around the wheel assembly.

As noted above, tongue 52 is generally shaped and sized to engage groove 54 and groove 54 is generally sized and shaped to receive tongue 52 to interlock inboard annular rim 24 and outboard annular rim 30 such that tongue and groove interface 50 inhibits relative rotation between inboard annular rim 24 and outboard annular rim 30 about axis 18. In one example, groove 54 may include a particular axial length, L (FIG. 2B), to ensure engagement between groove 54 and tongue 52 during and after assembly of inboard annular rim 24 and outboard annular rim 30. For example, length L of groove 54 may be sized as a function of the axial length of outboard annular rim 30 of outboard annular wheel component 14. In one example, the axial length of groove 54 in inboard outboard annular rim 30 is less than or equal to 50% of the axial length of landing 30. In another example, the axial length of groove 54 in inboard outboard annular rim 30 is less than or equal to 25% of the length of landing 30.

In some examples, one or both of tongue 52 and groove 54 may be specifically sized in directions other than axially, as described above with reference to the axial length, L, of groove 54 illustrated in FIG. 2B. As noted, in some examples, a groove of a tongue and groove interface according to this disclosure may include a depression extending radially outward from a radially inner surface of outboard annular rim 30 of outboard annular wheel component 14. In some examples, outboard annular rim 30 of outboard wheel component 14 may include an undercut in the radially inner surface of landing 30 (see, e.g. under cut in the radially inner surface of outboard annular rim 30 visible in the view of wheel assembly 10 shown in FIG. 1). In such an example, in the event a tongue and groove interface is employed with a groove that includes a depression extending radially outward from a radially inner surface of outboard annular rim 30, the groove may be sized with a radial depth that is less than or equal to the depth of the undercut in outboard annular rim 30.

Referring again to the example of FIGS. 2A and 2B, tongue 52 of tongue and groove interface 50 is associated with inboard rim 24 and groove 54 is associated with outboard rim 30. FIGS. 4A and 4B illustrate an example in which a tongue and groove interface according to this disclosure includes a tongue extending from an outboard annular wheel component and a groove in an inboard annular wheel component of another wheel assembly. FIG. 4A is a broken perspective view of example wheel assembly 70 including tongue and groove interface 72 between inboard annular rim 24 and outboard annular rim 30. FIG. 4B is a partial section view of tongue and groove interface 72. The example wheel assembly 70 of FIGS. 4A and 4B is substantially the same as wheel assembly 10 of FIGS. 1-2B, except it includes a different tongue and groove interface 72 between inboard annular rim 24 and outboard annular rim 30.

In FIG. 4A, inboard rim 24 is interlocked to outboard rim 30 by tongue and groove interface 72 to inhibit relative rotation between inboard wheel component 12 and outboard wheel component 14 about a longitudinal axis 18 of wheel assembly 10. Tongue and groove interface 72 includes tongue 74 and groove 76. In contrast to the example of FIGS. 2A and 2B, tongue 74 of tongue and groove interface 72 is associated with outboard rim 30 and groove 76 is associated with inboard rim 24. Tongue 74 extends from outboard annular rim 30 of outboard wheel component 14. In particular in the example of FIGS. 4A and 4B, tongue 74 includes an elongated protrusion extending radially inward from a radially inward surface of outboard annular rim 30 of outboard wheel component 14. In another example, a tongue of a tongue and groove interface may include a protrusion extending axially from the inboard edge of outboard annular rim 30 of outboard wheel component 14.

Groove 76 includes a depression in and extending axially from an outboard edge of inboard annular rim 24 of inboard annular wheel component 12. A depression, e.g. groove 76 in inboard annular rim 24 may refer to a material void in rim 24 that does not extend all the way through the thickness of the rim. In another example, a groove of a tongue and groove interface may include a slot cut completely through inboard annular rim 24, e.g. such as groove 54 in the example of FIGS. 2A and 2B. Tongue 74 is shaped and sized to engage groove 76 and groove 76 is sized and shaped to receive tongue 74 to interlock inboard annular rim 24 and outboard annular rim 30 such that tongue and groove interface 72 inhibits relative rotation between inboard wheel component 12 and outboard wheel component 14.

One advantage of tongue and groove interface 72 of wheel assembly 70 may be that configuring tongue 74 to protrude from the radially inner surface of outboard annular rim 30 of outboard wheel component 14 and groove 76 to be defined in the radially outer surface of inboard annular rim 24 of inboard wheel component 12 may maintain the continuity of the surfaces of outboard annular rim 30 and inboard annular rim 24 facing the tire, which may act to keep the surfaces the tire rests on substantially uninterrupted. Improving the continuity of the surfaces the tire rests on during operation of a vehicle wheel assembly, may reduce stresses on and wear of the tire, which may, in turn, increase the longevity and increase the reliability of the tire.

In one example, tongue 74 includes a generally rectilinear shape. For example in FIGS. 4A and 4B, tongue 74 includes a generally rectangular profile shape. As explained above, however, a tongue of a tongue and groove interface between an inboard annular wheel component and outboard annular wheel component according to this disclosure may include different profile shapes, including, e.g. the tongue profile shapes illustrated in FIGS. 3A-3F. Wheel assembly 70 is illustrated with one tongue and groove interface 72 interlocking inboard annular rim 24 and outboard annular rim 30 to inhibit relative rotation between the inboard and outboard components of the assembly. However, in other examples, wheel assembly 70 may include a plurality of tongue and groove interfaces 72, which may be distributed circumferentially around the wheel at approximately equal or unequal distances from one another. For example, wheel assembly 70 may include 1 to 8 tongue and groove interfaces 72, such as 1 to 4 tongue and groove interfaces 72, 3 to 4 tongue and groove interfaces 72, or 1 to 3 tongue and groove interfaces 72 configured to inhibit relative rotation between inboard annular rim 24 and outboard annular rim 30 of wheel assembly 70.

As noted above, tongue 74 is generally shaped and sized to engage groove 76 and groove 76 is generally sized and shaped to receive tongue 74 to interlock inboard annular rim 24 and outboard annular rim 30 such that tongue and groove interface 72 inhibits relative rotation between inboard annular rim 24 and outboard annular rim 30. In one example, groove 76 may include a particular axial length, L, to ensure engagement between groove 76 and tongue 74 during and after assembly of inboard annular rim 24 and outboard annular rim 30. For example, groove 76 may be sized as a function of the axial length of inboard annular rim 24 of inboard wheel component 12. In one example, the axial length of groove 76 in inboard annular rim 24 is less than or equal to 50% of the axial length of rim 24. In another example, the axial length of groove 76 in inboard annular rim 24 is less than or equal to 25% of the length of rim 24.

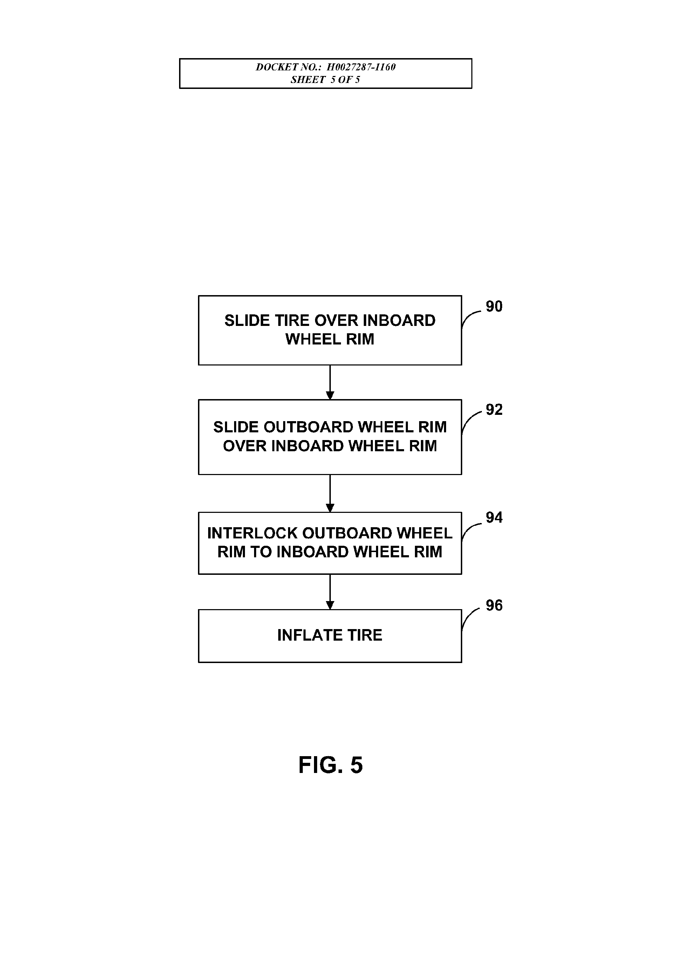

FIG. 5 is a flow diagram illustrating an example method of assembling a wheel assembly according to this disclosure. The example method of FIG. 5 includes sliding an uninflated pneumatic tire over an inboard annular wheel component to abut a tire bead flange of the inboard annular wheel component (90), sliding an outboard annular wheel component over the inboard annular wheel component (92), interlocking the outboard annular wheel component to the inboard annular wheel component with at least one tongue and groove interface configured to inhibit relative rotation between the inboard and outboard wheel components about an axis of rotation of the wheel assembly (94), inflating the pneumatic tire such that the tire expands to engage the tire bead flange of the inboard annular wheel component and a tire bead flange of the outboard annular wheel component arranged generally opposite the tire bead flange of the inboard wheel component (96). The example method of FIG. 5 is described in greater detail below with reference to wheel assembly 10 of FIGS. 1-2B. However, methods in accordance with the techniques described in this disclosure may be equally applicable to other wheel assemblies including, e.g., wheel assembly 70 of FIGS. 4A and 4B.

The method of FIG. 5 includes sliding an uninflated pneumatic tire over an inboard annular wheel component to abut a tire bead flange of the inboard annular wheel component (90). For example, during assembly of wheel assembly 10, an uninflated pneumatic tire may be slid over inboard annular rim 24 of inboard annular wheel component 12 inboard (left in view of FIG. 1) from an outboard edge of inboard wheel component 12 until the tire abuts or nearly abuts tire bead flange 26 on inboard rim 24. In one example, the method of FIG. 5 may optionally include mounting a sealing gasket or other seal member within seal groove 32 in inboard annular rim 24 of inboard annular wheel component 12.

Outboard annular wheel component 14 may be slid onto inboard wheel component 12 (92) inboard (left in view of FIG. 1) from an outboard edge of inboard wheel component 12 such that the cylindrical opening formed by outboard annular rim 30 of outboard wheel component 14 receives inboard annular rim 24. In one example, the method of FIG. 5 may optionally include axially securing outboard annular wheel component 14 to inboard annular wheel component 12 with split lock ring 16 by positioning lock ring 16 in lock ring groove 34 of inboard annular rim 24 of inboard wheel component 12 after outboard wheel component 14 is assembled onto inboard wheel component 12.

In addition to sliding outboard annular wheel component 14 onto inboard annular wheel component 12 (92), the method of FIG. 5 also includes interlocking inboard wheel component 12 to outboard annular wheel component 14 with at least one tongue and groove interface 50 configured to inhibit relative rotation between inboard wheel component 12 and outboard wheel component 14 about axis of rotation 18 of wheel assembly 10 (94). As explained above, outboard annular wheel component 14 is slid over inboard annular wheel component 12 and axially secured thereto by split lock ring 16. Additionally, inboard rim 24 is interlocked to outboard rim 30 by tongue and groove interface 50 to inhibit relative rotation between inboard wheel component 12 and outboard wheel component 14. In one example, as outboard annular wheel component 14 may be slid onto inboard wheel component 12 (92), tongue 52 extending radially outward from a radially outward surface of inboard annular rim 24 of inboard wheel component 12 may engage groove 54 cut into the inboard edge of outboard annular rim 30 of outboard wheel component 14. Groove 54 receives tongue 52, thereby interlocking outboard wheel component 14 to inboard wheel component 12 such that relative rotation between the two wheel components is inhibited.

The tire on wheel assembly 10 may be inflated (96) such that the respective beads of the tire exert a separating force on respective inboard and outboard tire bead flanges 26 and 28 of inboard annular rim 24 and outboard annular rim 30, respectively. This force may act to move outboard annular wheel component 14 outboard (to the right in the view of FIG. 1) relative to inboard annular wheel component 12 until the wall of lock ring groove 36 of outboard annular wheel component 14 engages the lobe-shaped portion of split lock ring 16. With the full pressurization of a tire on wheel assembly 10, split lock ring 16 may act to axially secure outboard annular wheel component 14 on inboard annular wheel component 12.

Various examples according to this disclosure have been described. These and other examples are within the scope of the following claims. For example, the interlocking features (e.g., tongue & groove interface) between first and second annular wheel components can be used with other types of wheels in addition to wheel assembly 10 described with respect to FIG. 1, such as a wheel assembly that mechanically couples the first and second annular components together using a technique other than or in addition to split lock ring 16.

## Claims

1. An aircraft wheel comprising:
a first annular component;
a second annular component separable from the first annular component and connected to and aligned with the first annular component about an axis of rotation of the wheel; and
at least one tongue and groove interface between the first annular component and the second annular component configured to inhibit relative rotation between the first annular component and the second annular component about the axis of rotation of the wheel.

2. The wheel of claim 1, wherein the at least one tongue and groove interface comprises a tongue on the first annular component and a groove in the second annular component configured to receive the tongue on the first annular component.

3. The wheel of claim 1, wherein the at least one tongue and groove interface comprises a tongue on the second annular component and a groove in the first annular component configured to receive the tongue on the second annular component.

4. The wheel of claim 1, wherein the at least one tongue and groove interface comprises 1 to 8 tongue and groove interfaces between the first component and the second component distributed circumferentially around the wheel.

5. The wheel of claim 1, wherein the at least one tongue and groove interface comprises a plurality of tongue and groove interfaces between the first component and the second component distributed circumferentially around the wheel.

6. The wheel of claim 5, wherein the plurality of tongue and groove interfaces are distributed at approximately equal distances circumferentially around the wheel.

7. The wheel of claim 5, wherein the plurality of tongue and groove interfaces are distributed at unequal distances circumferentially around the wheel.

8. The wheel of claim 1, wherein the first annular component comprises a hub connected to a web extending radially outward from the hub and an inboard annular rim connected to the web, wherein the second annular component comprises an outboard annular rim and a tire bead flange extending radially outward from the outboard annular rim, and wherein the outboard annular rim is configured to receive the inboard annular rim.

9. The wheel of claim 8, wherein the at least one tongue and groove interface comprises:
a tongue extending from the inboard annular rim of the first annular rim; and
a groove defined by the outboard annular rim of the second annular rim and configured to receive the tongue extending from the inboard annular rim.

10. The wheel of claim 8, wherein the at least one tongue and groove interface comprises:
a tongue extending from the inboard outboard annular rim of the second annular rim; and
a groove defined by the inboard annular rim of the first annular rim and configured to receive the tongue extending from the inboard outboard annular rim.
